# EUROPEAN PATENT APPLICATION

(11) **EP 1 605 336 A1**
(43) Date of publication of application: **14.12.2005**
(21) Application number: 04721313.7
(22) Date of filing: 17.03.2004
(51) Int. Cl.: G06F 3/00, H04Q 9/00

(54) **BROWSER PROGRAM AND CONTENT DISPLAY DEVICE**

(30) Priority: 18.03.2003 JP 2003074650; 29.08.2003 JP 2003305866
(71) Applicant: ACCESS CO., LTD., Tokyo 1010064 (JP)
(72) Inventor: OKADA, Masaru, Chiyoda-ku, Tokyo 1010064 (JP); TODASHIRO, Kazuo, Chiyoda-ku, Tokyo 1010064 (JP); KOMATSUDA, Kaoru, Chiyoda-ku, Tokyo 1010064 (JP); HASEGAWA, Yukio, Chiyoda-ku, Tokyo 1010064 (JP); ITO, Shunji, Chiyoda-ku, Tokyo 1010064 (JP); CHIBA, Ohki, Chiyoda-ku, Tokyo 1010064 (JP); SASAKI, Takeshi, Chiyoda-ku, Tokyo 1010064 (JP); INOGUCHI, Yohei, Chiyoda-ku, Tokyo 1010064 (JP)
(74) Representative: Kuhnen & Wacker
(86) International application number: PCT/JP2004/003528
(87) International publication number: WO 2004/084056

(57) **Abstract**

The present invention is a browser program for a content display apparatus, such as a TV set or a DVD player. This browser program displays the same number of windows provided correspondingly to at least a part of multiple buttons provided to a controller of the content display apparatus by superimposing them on a display area, is able to display at least a part of results of interpreting a markup language document in each window, and if one of the buttons other than the button corresponding to the window currently displayed in the highest-level layer is activated, it displays the window corresponding to this button in the highest-level layer.

## Description

### BACKGROUND OF THE INVENTION

### Technical Field

The present invention relates to a browser program and a content display apparatus, and in particular, to the browser program and the content display apparatus suitable for viewing a markup language document of an Internet site with operating means, such as a remote controller having relatively a small number of hardware button keys and software button keys having functions equivalent thereto.

### Background Art

Along with diffusion and development of Internet technologies, a large number of users are now able to be provided with information created by a markup language document such as an HTML document. The users interpret the markup language document with a browser operating on a client such as a personal computer, and display it on a content display apparatus such as a liquid crystal display of the client.

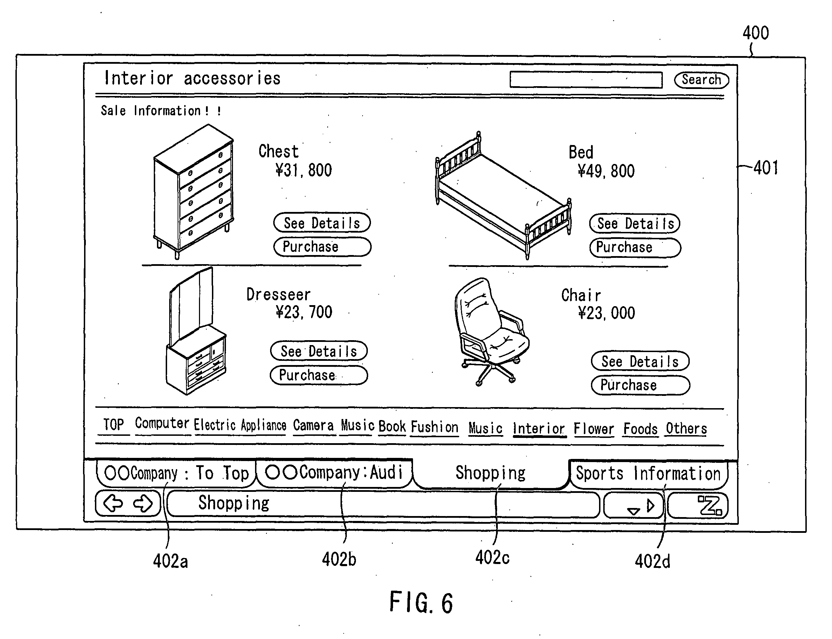

As for a method of displaying multiple different markup language documents on the same content display apparatus with a browser, there is the method of the highest-level window according to a conventional window switching method by selection. This is the method whereby, if the user performs an operation for selecting a window to be viewed, the browser displays the selected window as the highest-level layer. For this reason, the window is rendered as the highest-level while selecting related windows by performing the operation a few times. A technique for viewing the markup language documents by such a multiple window switching method is disclosed in Japanese Patent Laid-Open No. 2002-23912 (paragraphs [0037] to [0040], FIG. 6) for instance.

### Disclosure of the Invention

As for the window switching method described above, it is necessary for the user to read a switching number corresponding to a window from a screen and input it. Therefore, there is a problem that a user operation for switching is cumbersome compared to the case where the user can instinctively perform the operation such as a click of a conventional mouse.

As a feature of a markup language document displayed in the window is a function of linking to another page by means of an anchor. This function allows a browser to jump to related pages one after another by a simple operation of the click with the mouse. However, there is a problem that selection of a link is difficult in the case of using operating means having no pointing device like the mouse, such as a remote controller of a TV set. An object of the present invention is to provide the browser capable of realizing the window switching method instinctively operable by the user and easily selecting the link in the markup language document even when using operating means having no pointing device.

The present invention has the following characteristics as means for solving the problems.

A first aspect of the present invention is proposed as a browser program for viewing the markup language document. The markup language document may be either the document suited to the Internet such as an HTML (Hyper Text Markup Language) document or an XML (extensible markup language) document or the document describing contents of a data broadcast such as a BML (Broadcast markup language) document or a B-XML document.

The browser program displays multiple windows by superimposing them on a display area provided by a display apparatus. The browser program can display at least a part of results of interpreting the markup language document in each window, where multiple tabs are provided like a so-called tab browser for instance so as to display the contents corresponding to each tab as the tab is operated. According to the aspect of the present invention, it is possible to handle the same number of windows as at least a part of multiple buttons provided to the operatingmeans, where the windows are provided correspondingly to the part of multiple buttons, and the buttons provided to the operating means are used as the means for handling the windows.

If one of the buttons other than the button corresponding to the window displayed in the highest-level layer is activated, the window corresponding to this button is displayed in the highest-level layer.

"The multiple buttons provided to the operating means" do not necessarily have to be all the buttons of the operating means, but may also be at least a part of hardware buttons of the operating means (all or a part of color buttons out of hardware buttons provided to a controller as the operating means, for instance).

According to the aspect of the present invention, it is possible to have a configuration in which, if the button corresponding to the window currently displayed in the highest-level layer is activated, an operation other than displaying a predetermined window in the highest-level layer is performed. The operation other than displaying the window in the highest-level layer may be any operation as long as it concerns the browser. For instance, it is possible to switch between frames in the case where the markup language document currently displayed in the window displayed in the highest-level layer has a frame structure.

In the case where at least a part of the markup language document displayed as the results of interpretation in the window displayed in the highest-level layer includes one or multiple focus elements, the browser program according to the aspect of the present invention may display focus display information, when one of the focus elements is selected, indicating a selected focus element in a window-corresponding color which is a color associated with the window currently displayed in the highest-level layer and determined to be different for each window.

The "focus element" is an element describable in the markup language document and selectable by the operation of the operating means, such as an anchor, a text box, a check box, a select component or an I frame.

The "focus display information" is the information capable of indicating to the user that the anchor is selected, such as an underline, a highlight (reversing display) or a frame attached to the anchor which is the focus element. The "focus display information" may be displayed in a different form according to what information the focus element is. For instance, in the case where the focus element is textual information, the focus display information may be displayed as the underline attached to the textual information. And in the case where the focus element is image information, the focus display information may be the frame enclosing the image information.

The "window-corresponding color" is one color determined for each window, and the window-corresponding color of one window is determined to be different from the window-corresponding colors of other windows. For instance, in the case where the browser program displays four windows of the first to fourth, the window-corresponding colors of the first to fourth windows are determined as "red, " "blue," "green" and "yellow." Therefore, if the window currently displayed in the highest-level layer is switched from the first window to the second window, the color of the focus display information also changes from "red" to "blue." The window-corresponding color may be determined to be the color matching with or similar to a display color of the tab given to each window, or may be determined to be the color matching with or similar to the color given to the button corresponding to each window.

A content display apparatus on which this browser is installed may be any apparatus having a hardware environment capable of executing the browser program, such as a TV set ready for data broadcasting, a set-top box for a TV set, a cellular phone, a PDA (Personal Data Assistant), a personal computer, a home-use game console supporting a network, an HDD recorder, a DVD recorder/player or a VTR player.

The operating means may be any operating means capable of operating the content display apparatus on which this browser is installed and having the buttons. For instance, it may be a keyboard connectable to the content display apparatus by a wireless or wired connection, a dial button of the cellular phone or a remote controller (either wired or wireless) of the TV set.

According to the present invention, it is possible to provide the browser capable of realizing the window switching method instinctively operable by the user and easily selecting the link in the markup language document even when using the operating means having no pointing device.

### Brief Description of the Drawings

FIG. 1 is a diagram showing a configuration example of a browsing system using a browser according to an embodiment of the present invention;
FIG. 2 is a diagram showing an appearance of the browsing system according to the embodiment of the present invention being used by a user;
FIG. 3 is a diagram showing another configuration example of the browsing system using the browser according to the embodiment of the present invention;
FIG. 4 (A) is a perspective view showing an example of a remote controller supporting BML, and FIG. 4 (B) is a perspective view showing an example of a remote controller not supporting BML;
FIG. 5 is a diagram showing an example of the remote controller having software buttons;
FIG. 6 is a diagram showing an example of a display screen of a browser program according to the embodiment of the present invention;
FIG. 7 is a diagram showing an example of the display screen of the browser program according to the embodiment of the present invention;
FIG. 8 is a block diagram showing a configuration example of a browser apparatus having the browser program according to the embodiment of the present invention installed thereon;
FIG. 9 is a functional block diagram of the browser apparatus according to the embodiment of the present invention;
FIG. 10 is a flowchart showing an operation example of an HTML browser execution process;
FIG. 11 is a functional block diagram for describing a more detailed configuration example of the browser program;
FIG. 12 is a flowchart showing an operation example of the browser program in the case where a hardware button is pushed;
FIG. 13 is a flowchart showing an operation example of the browser program in the case where a script for opening a new markup language document is described;
FIG. 14 is a flowchart showing an operation example of the browser program in the case where the user requests opening of a new markup language document;
FIG. 15 is a diagram showing an example of a dialog box for the user to preset an operation in the case of no blank tab;
FIG. 16 is a flowchart showing an example of a display process of focus display information;
FIG. 17 is a diagram showing an example of the screen displaying the focus display information;
FIG. 18 is a diagram showing an example of the screen displaying the focus display information following FIG. 17;
FIG. 19 is a diagram showing an example of the screen displaying the focus display information following FIG. 18; and
FIG. 20 is a diagram showing an example of the screen displaying the focus display information following FIG. 19.

### Best Mode for Carrying Out the invention

Hereunder, an embodiment of the present invention will be described by referring to the drawings.

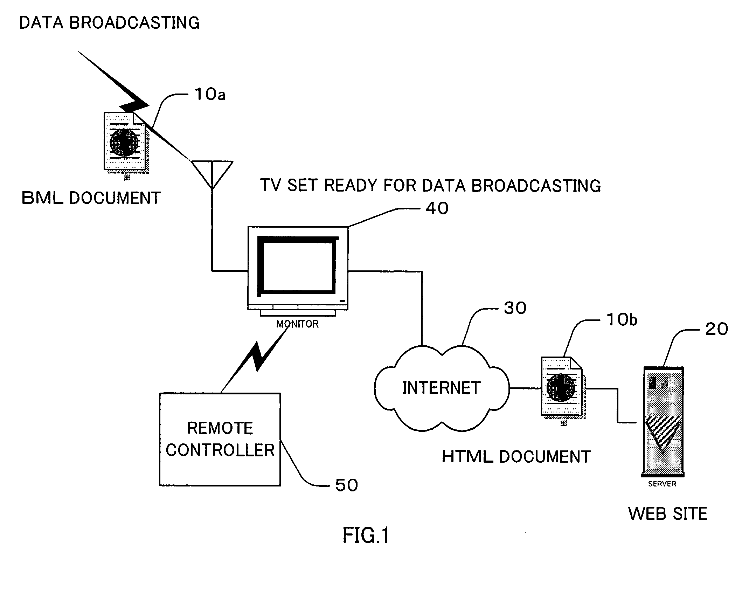

FIG. 1 is a diagram showing a configuration example of a browsing systemusing a browser according to this embodiment.

This browsing system is configured by a TV set 40 as a content display apparatus having a browser (not shown) capable of displaying a markup language document such as a BML document 10a transmitted by data broadcasting and/or an HTML document 10b obtained from a Web site 20 via an Internet 30, and a remote controller 50 as operating means of the TV set 40. The remote controller 50 has multiple hardware buttons. In the example shown in FIG. 1, the TV set 40 incorporates the hardware for executing the browser. It is also possible, however, to provide an information processing apparatus such as a set-top box apart from the TV set 40 so as to have the browser executed by the information processing apparatus.

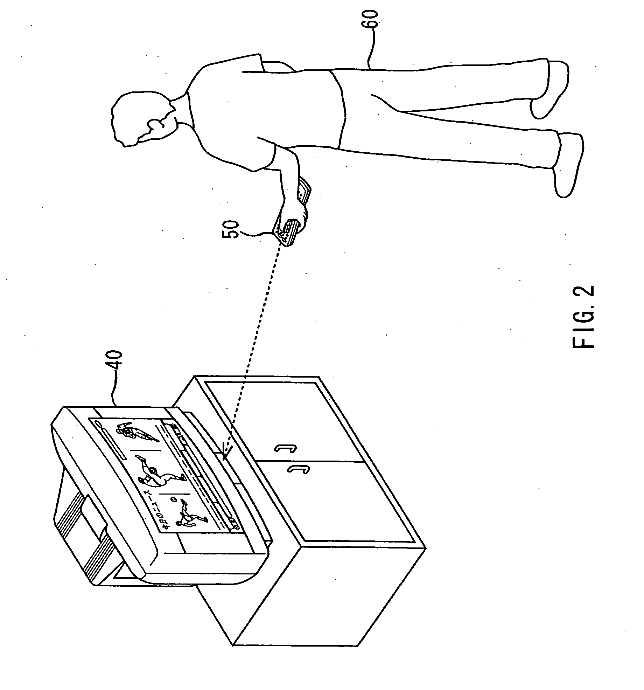

FIG. 2 is a diagram showing an appearance of the system being used by a user. A user 60 operates the browser (not shown) by operating the remote controller 50, and continuously selects and views the contents obtained by the data broadcasting and the contents obtained from the Internet on the TV set 40.

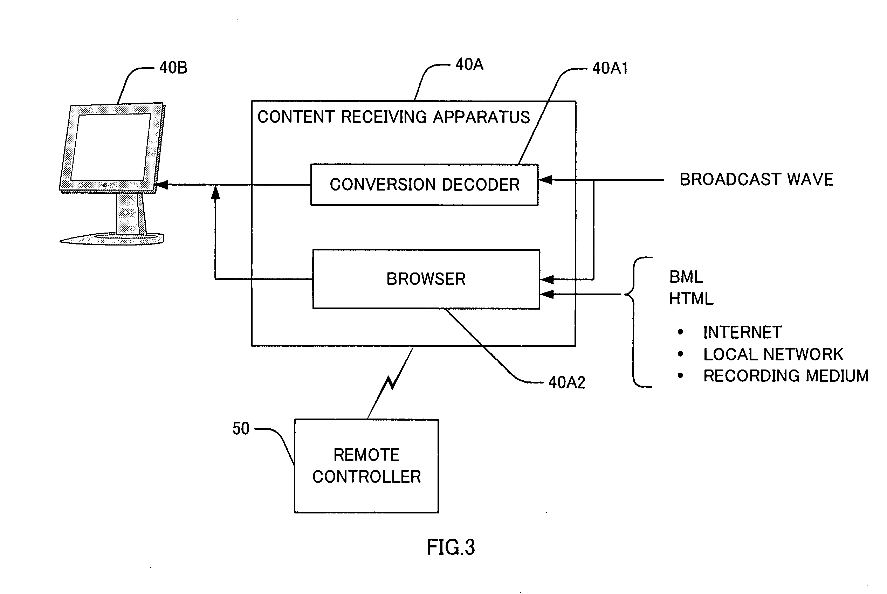

FIG. 3 is a diagram showing another configuration example of the browsing system using the browser according to this embodiment. The example of FIG. 1 indicated earlier shows the configuration using the TV set 50 as an example of the content display apparatus integrated with an image display apparatus such as a liquid crystal display or a CRT. However, the content display apparatus does not always have to be integrated with the image display apparatus. It is also possible to implement the browsing system and browser program according to this embodiment by using the content display apparatus separate from the image display apparatus.

The configuration example shown in FIG. 2 has the browsing system configured by a content display apparatus 40A and an image display apparatus 40B connected thereto. The content display apparatus 40A has a conversion decoder 40A1 for receiving a broadcast wave and decoding or demodulating it to take out a picture signal and having an image based on the picture signal displayed on the image display apparatus 40B and a browser apparatus 40A2 for receiving data on the markup language document from the outside and having a result of interpreting it displayed on the image display apparatus 40B. The markup language document to be received by the browser apparatus 40A2 may be the BML or HTML. The data on the markup language document may be either transmitted as a part of the broadcast wave or obtained from a source different from the broadcast wave, such as the Internet, a storage in a local network or a recording medium readable by the content display apparatus 40A. The broadcast wave and the data on the markup language document may be either directly received from the outside or stored once in storage means (a hard disk, a DVD and so on) provided on the content display apparatus 40A after receiving it from the outside and read from the storage means thereafter.

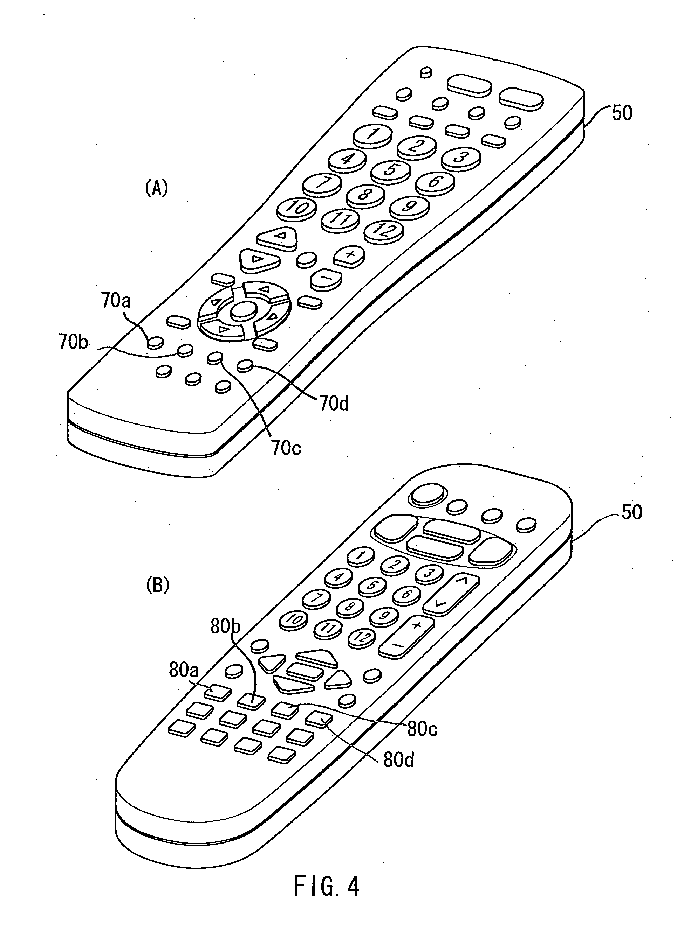

Figs. 4 are diagrams showing examples of a remote controller 50. FIG. 4 (A) shows the remote controller for the TV set ready for the data broadcast, that is, supporting BML. It has so-called color buttons 70a to 70d provided thereon in addition to a channel key and other keys. The color buttons have specific colors such as red, blue, yellow and green assigned in advance. The buttons and links (referred to as objects hereafter) displayed in a BML document are displayed in these colors. If the color button of a certain color is pushed, the objects in a corresponding color are activated to perform a predetermined operation as to the objects. As for the browser according to this embodiment, browser operation may also be performed by having the color buttons pushed by the user.

FIG. 4 (B) shows the remote controller 50 not supporting BML and having no color buttons. The browser according to this embodiment can also be operated by such a remote controller. In the case of such a remote controller 50, one of the hardware buttons should be assigned to the browser operation. In the example shown in FIG. 4 (B), the browser is operated by assigning hardware buttons 80a to 80d to the browser operation.

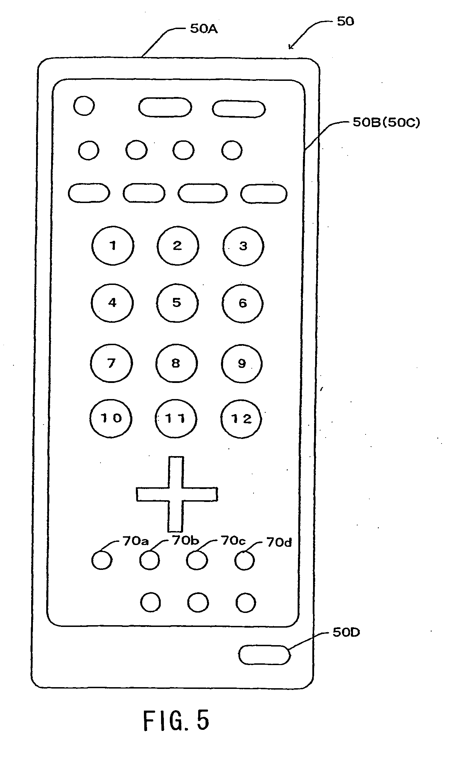

FIG. 5 is a diagram showing an example of the remote controller 50 having so-called software buttons. The buttons of the operating means according to this embodiment may be the software buttons as shown in FIG. 5 in addition to the hardware buttons shown in Figs. 4 (A) and (B).

The remote controller 50 shown in FIG. 5 has a liquid crystal display 50B on a body 50A and a transparent touch panel sensor 50C provided on the liquid crystal display 50B. It also has a power switch 50D for operating the liquid crystal display provided thereon.

The liquid crystal display 50B in a driving state has the buttons and keys including the color buttons 70a to 70d image-displayed thereon. The user touches a touch panel sensor 50C to touch a desired button. The touch panel sensor 50C detects a location touched by the user, and sends a command corresponding to the button to the content display apparatus 40A on the assumption that the button corresponding to the location is activated.

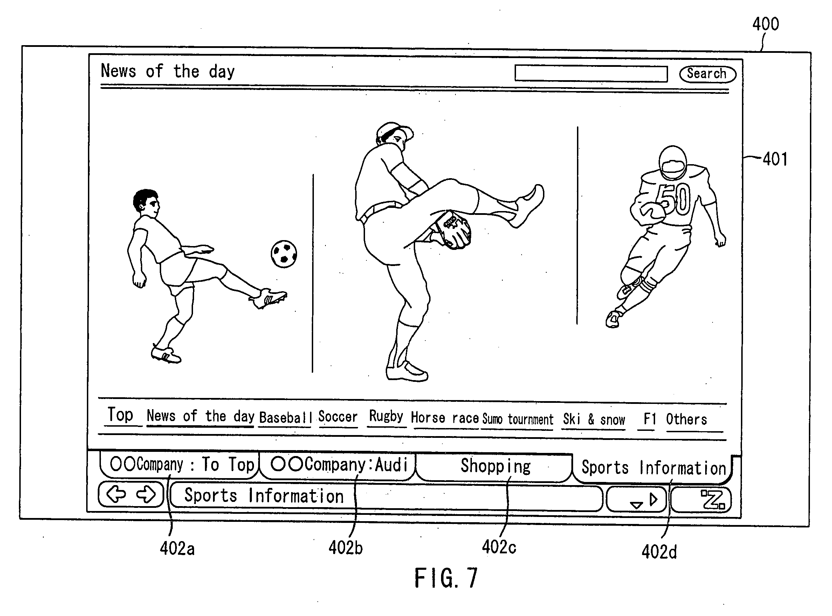

Figs. 6 and 7 are diagrams showing examples of a display screen of the browser according to the embodiment.

In FIG. 6, there are a display area (window) 401 and tabs 402a to 402d for switching display contents in the display area 401 provided in a screen 400 of the TV set. The tabs 402a to 402d are associated with the hardware buttons 70a to 70d or 80a to 80d of the remote controller 50 respectively. If the user pushes a corresponding hardware button, the tab corresponding to the hardware button is activated so as to execute a process (operation) set up on the tab. For instance, in the case where the process set up on the tab 402d is to render the display of the markup language document associated with the tab as the highest-level layer in the display area, and if the hardware button 70d is pushed in the state shown in FIG. 6, the tab 402d corresponding to the hardware button is activated so as to execute the process set up on the tab, which is to render the display of the markup language document associated with the tab as the highest-level layer in the display area.

FIG. 7 shows an example of the screen in the state where, in a display state shown in FIG. 6, the hardware button corresponding to the tab 402d is pushed by the user, and the process is executed to render the display of the markup language document associated with the tab as the highest-level layer in the display area. This example shows the state in which the contents corresponding to the tab 402d are newly rendered in the display area 401.

Thus, the user can see the screen and push the hardware buttons corresponding to the tabs 402a to 402d so as to continuously switch and view the markup language documents.

### [Configuration Example]

Next, a description will be given as to an example of a hardware configuration for realizing the browser (referred to as a "browser apparatus" hereafter).

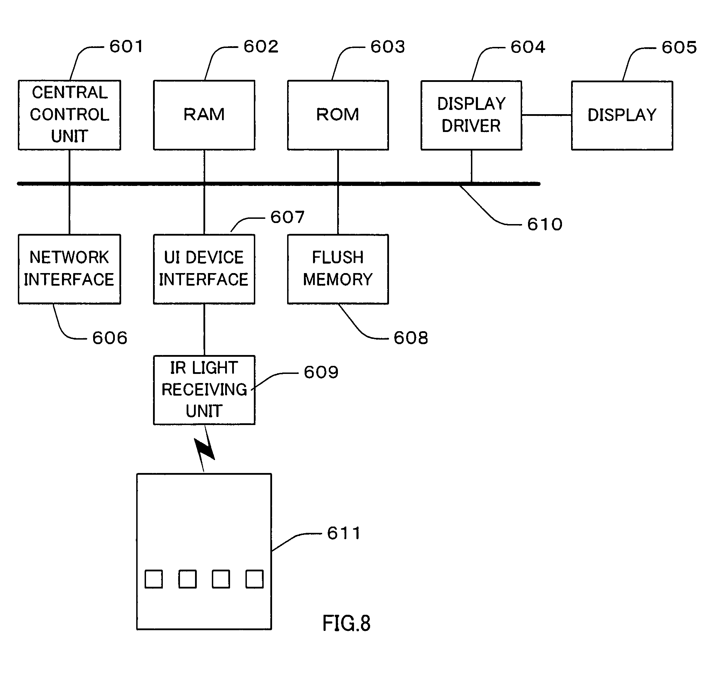

FIG. 8 is a block diagram showing a configuration example of the browser apparatus. The browser apparatus is an information processing apparatus having the browser according to this embodiment installed thereon, and has a central control unit 601, an RAM 602, an ROM 603, a display driver 604, a display 605, a network interface 606, a user interface (UI) device interface 607, a flash memory 608 and an IR light receiving unit 609.

The central control unit 601, RAM 602, ROM 603, display driver 604, network interface 606, user-interface-device interface 607 and flash memory 608 are mutually connected by a bus 610, and the data and commands are mutually sent and received via the bus 610.

The RAM 602 has a function of temporarily holding and storing calculation results of the central control unit 601 and the markup language document data obtained from the outside. The ROM 603 has a function of storing an OS (Operating System) and a program of browser software, and the central control unit 601 reads these programs from the ROM 603 and performs the process according to the programs. The flash memory 608 has a function of holding the data, URLs and addresses obtained from the outside for the sake of subsequent processing. The network interface 606 has a function of establishing a connection with an external network and sending and receiving the data to and from the external network, and is configured by a protocol stack and an LAN board for instance. The user-interface-device interface 607 has a function of receiving an input from a remote controller 611 via the IR light receiving unit 609 and passing it to the central control unit 601. The IR light receiving unit 609 has a function of receiving an infrared signal issued by the remote controller 611 and then converting it to an electrical signal and passing it to the user-interface-device interface 607.

The display driver 604 has a function of receiving from the central control unit 601 a bitmap data which is the results of interpreting the markup language document and driving the display based on this. The display 605 is the liquid crystal display or a CRT display, which has a function of optically displaying the image based on a driving signal from the display driver 604.

This example has the configuration in which the remote controller 611 conveys a user input to the browser apparatus by infrared communication. However, it is not intended to limit data transmission between the remote controller 611 and the browser apparatus of the present invention to the infrared communication. It is possible to implement the present invention whatever form of communication is adopted, not limiting it to a wireless or wired form.

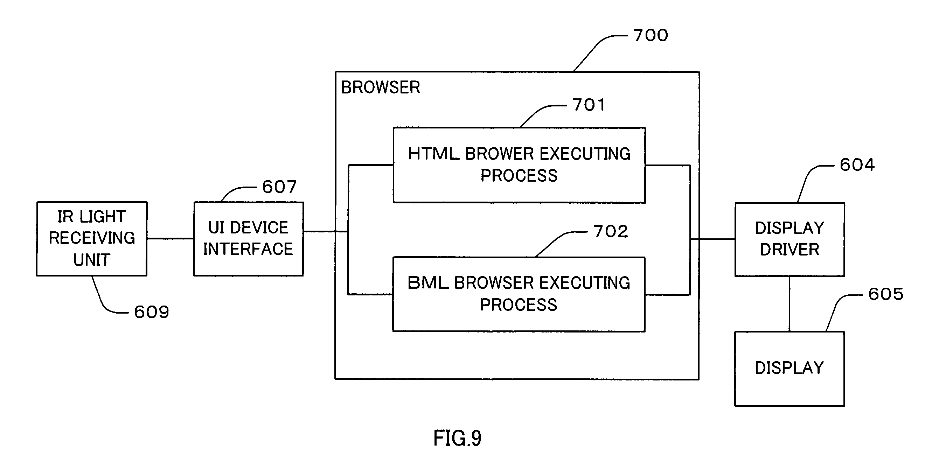

FIG. 9 is a functional block diagram of the browser apparatus according to this embodiment, showing the browser apparatus capable of processing both the HTML document from the Internet and BML document from the data broadcasting. The browser apparatus has a browser program 700 according to this embodiment installed thereon. To be more specific, a program file of the browser program 700 is stored in the ROM 603 or the flash memory 608 shown in FIG. 8, and is read and executed by the central control unit 601. The executed browser program 700 implements an HTML browser execution process 701 and a BML browser execution process 702. The RAM 602 provides a working area for executing the program. The flash memory 608 may also be used as a data area for storing the received data. The processes 701 and 702 are selectively called and executed as appropriate according to the kind of the markup language document to be displayed.

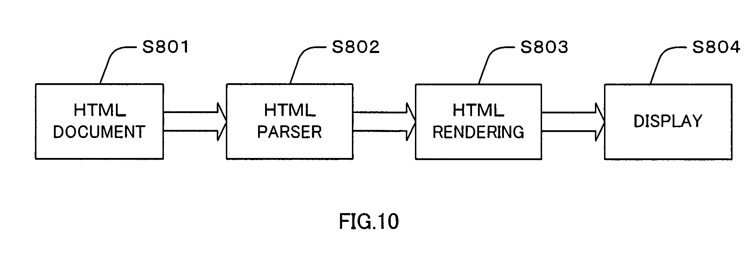

FIG. 10 shows main processing of the HTML browser execution process 701. FIG. 10 is a flowchart showing an operation example of the HTML browser execution process 701. First, the HTML browser execution process 701 obtains the HTML document 10b from a Web server 20 (step S801), and performs a syntax analysis of the HTML document 10b and extracts rendering elements such as character strings and images so as to convert each rendering element to a tree-like parse tree (HTML parser; step S802). Next, it develops the rendering elements into display data based on the parse tree obtained by the HTML parser (HTML rendering; step S803). The browser program 700 passes the developed display data to the display driver 604. And the display driver 604 has the contents of the HTML document 10b displayed on the display 605 according to the display data (step S804).

The BML browser execution process 702 performs almost the same process as the process shown in FIG. 10, and so a description thereof will be omitted.

Next, a description will be given as to a more detailed configuration of the browser according to this embodiment.

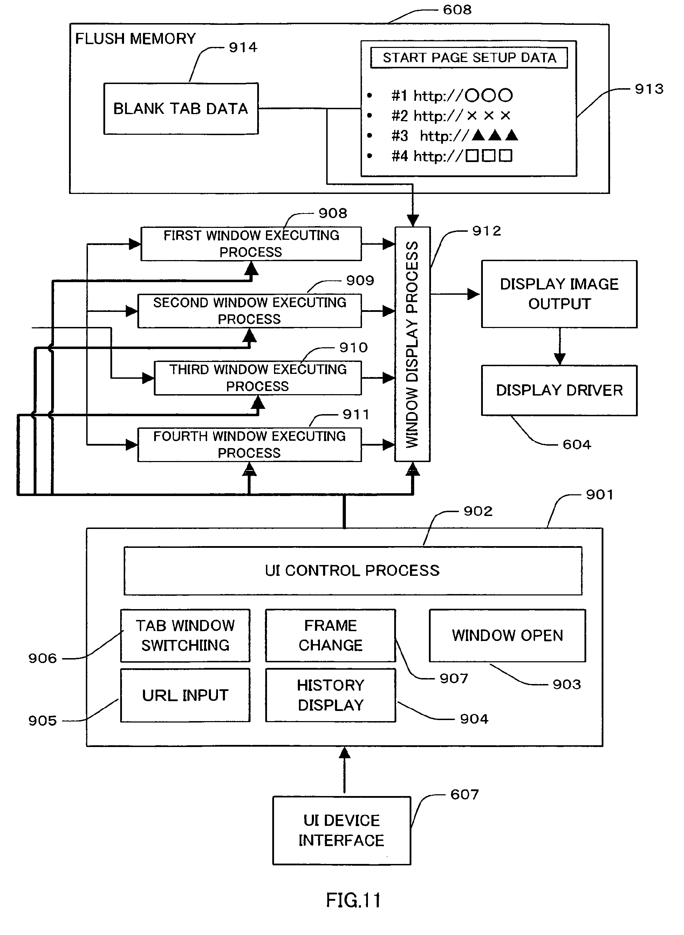

FIG. 11 is a functional block diagram for describing a more detailed configuration example of the browser program.

The browser program has a control portion 901. The control portion 901 receives the user input from the user-interface-device interface 607, and calls necessary processes from a process group for performing the browser functions, such as a user interface (UI) control process 902, a window open process 903, a history display process 904, a URL input process 905, a tab window switching process 906 and a frame change process 907 according to the user input so as to perform the processing.

The user interface control process 902 has a function of controlling the entire browser, and especially has a function of grasping and managing the window currently in the highest-level layer, decidingwhat process shouldbe performed according to the pushed hardware button and having other processes performed according to this decision.

The window opening process 903 has a function of, in the case where it becomes necessary to open a new markup language document, controlling which window the contents of the new document should be displayed in.

The history display process 904 displays a list of the markup language documents viewed in the past.

The URL (Universal Resource Locator) input process 905 displays an input box and a window on a screen for receiving a URL input from the user so as to prompt the URL input of the user. The contents of the markup language document obtained by the browser according to the URL input may be either displayed in the display area 401 or set in a lower layer of the contents of the markup language document currently displayed so as to display them when a corresponding tab is activated.

The tab window switching process 906 has a function of, in order to perform the processes set up on the corresponding tabs 402a to 402d according to pushing of the hardware buttons 70a to 70d and 80a to 80d corresponding to the tabs, instructing a first window execution process 908, a second window execution process 909, a third window execution process 910 and a fourth window execution process 911 to perform the processes.

Each of the window execution processes 908 to 911 are corresponding to tabs 402a to 402d, and obtains and performs the syntax analysis of the markup language document data set up on the tabs according to the signals and commands indicating the pushing of the hardware buttons 70a to 70d and 80a to 80d. And it extracts the rendering elements such as the character strings and images based on the markup language document data set up on the tabs so as to convert each rendering element to the tree-like parse tree (parsing). It develops the rendering elements into the display data (bitmap data for instance) based on the parse tree (rendering). Hereunder, this display data is called rendering data.

The frame change process 907 switches between the frames if the hardware button corresponding to the window currently displayed in the highest-level layer is pushed in the case where the markup language document displayed in the window currently displayed in the highest-level layer has a frame structure. The frame change process does not have to be prepared as the independent frame change process 907 described above. It may also be prepared as a sub-process in each window execution process, for instance.

A window display process 912 receives the rendering data obtained based on the markup language document data from each window execution process, and generates display image data (bitmap data for instance) for displaying in the browser the rendering data corresponding to the window currently in the highest-level layer grasped and managed by the user interface control process 902 so as to pass it to the display driver 604. The display image data passed from the window display process 912 to the display driver 604 is the data, for instance, wherein a browser window having the display area (window) 401 and the tabs 402a to 402d for switching the display contents in the display area 401 as shown in Figs. 6 and 7 displays the results corresponding to the window currently in the highest-level layer in the display area 401.

The flash memory 608 stores the URL of the markup language document displayed in each tab window as a startup document data 913 upon startup, or stores a data 914 (referred to as "blank tab data") for specifying the markup language document to be displayed on the tab in the case where there is an blank tab (a tab in a state of having no markup language document determined to be displayed in a corresponding window. Same hereafter) described later.

### [Operation example of the browser program]

Next, a description will be given as to main operation examples of the browser program according to this embodiment.

### [When the hardware button other than that of the highest-level layer is pushed]

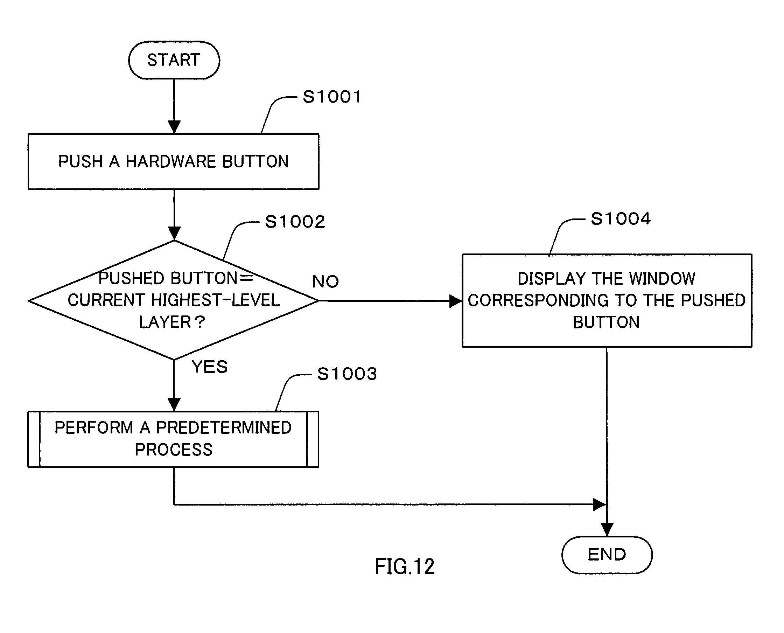

To begin with, a description will be given by referring to FIG. 12 as to the operation example of the browser in the case where the hardware button is pushed.

In the state of currently having the first window execution process 908 in the highest-level layer, the hardware button corresponding to the second window execution process 909 is pushed (step S1001). The user interface control process 902 grasping and managing the highest-level layer currently determines whether or not the pushed hardware button is corresponding to the window opened as the highest-level layer currently (step S1002).

In the case where the pushed hardware button is not corresponding to the window opened as the highest-level layer currently, the user interface control process 902 instructs the tab window switching process 906 to switch the tab window. On receiving this instruction, the tabwindow switchingprocess 906 orders the second window execution process 909 to perform the process. On receiving this order, the second window execution process 909 obtains predetermined markup language document data and performs the HTML parser (step S801) process and the HTML rendering (step S803) process so as to pass the rendering data as the results thereof to the window display process 912. The other window execution processes 908, 910 and 911 also process the corresponding markup language documents likewise so as to pass the rendering data to the window display process 912.

On receiving the rendering data from each window execution process, the window display process 912 generates the display image data corresponding to the window of the highest-level layer currently grasped and managed by the user interface control process 902 so as to pass it to the display driver 604. The display driver 604 has the state in which the contents of the markup language document obtained by the second window execution process 909 are in the highest-level layer displayed on the display 605 according to the display image data (step S1003). Consequently, the pushed hardware button and the contents of the markup language document associated with the tab corresponding to the hardware button are displayed in the highest-level layer in replacement of the previously displayed contents so as to be viewable for the user.

### [Process example in the case where the hardware button corresponding to the window in the highest-level layer is pushed]

In the case where the pushed hardware button is corresponding to the window currently opened as the highest-level layer in the step S1002, the user interface control process 902 orders the other processes to perform the predetermined processes. It is possible, by performing such processing, to use the same hardware button differently as two processing-instruction buttons for a tab window switching process and another process so as to effectively use the remote controller having the limited number of buttons.

There are various processes thinkable as applicable processes as the "predetermined processes." In the case where the markup language document displayed currently in the highest-level layer has a frame structure for instance, it is possible to switch the active state between the frames. In the case where the markup language document does not have the frame structure, it is thinkable to perform the following processes. (1) To generate a URL input dialog for having a user obtain a new markup language document; (2) To display a history dialog; and (3) To display a bookmarked URL list.

The "predetermined processes" may be set up either by a manufacturer on product shipment or by the user.

### [Operation example in the case of the blank tab]

Next, handling of the blank tab of the browser according to this embodiment will be described.

The browser apparatus according to this embodiment has the same number of tabs as the multiple hardware buttons of the remote controller 50 (611). However, it may also happen that, as the user views various markup language documents by following the links, the number of open markup language documents becomes smaller than the number of tabs. In such a case, it is thinkable to take a processing method of not displaying or withholding from displaying the tabs themselves when left over. To allow the user to instinctively understand a relation between the hardware buttons and the tabs, however, it is desirable that there are constantly the same number of hardware buttons and tabs. For that reason, the leftover tabs are indicated as the blank tabs according to this embodiment. Thus, the same number of tabs as the number of hardware buttons is constantly displayed on the screen.

As for the window corresponding to the blank tab, it is possible either to open none of the documents or to open the markup language document corresponding to the blank tab data 914 therein.

The browser apparatus according to this embodiment also displays the blank tabs. If the window corresponding to the blank tab can be effectively utilized, however, it becomes possible to provide more information to the user with a limited number of windows so as to effectively utilize hardware resources. According to this embodiment, the window corresponding to the blank tab is utilized when opening a new markup language document. As for opening of the new markup language document, there are two cases, that is, the case of having a script for opening of a new window described in the markup language document obtained by the browser and the case of having a request for the new markup language document made by the user to the browser.

### [Operation example in the case of having a script for opening of a new window described]

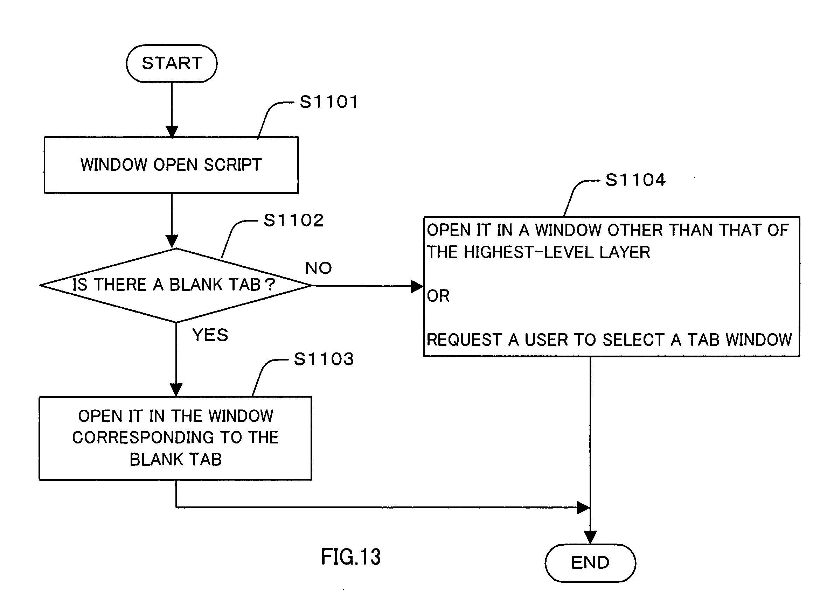

FIG. 13 is a flowchart showing an operation example of the browser in the case where a script for opening a new markup language document is described in the markup language document newly opened.

First, in the case where the browser obtains a certain markup language document, the script for opening of a new window is described therein. The user interface control process 902 detects this script (step S1101), and also determines whether or not the blank tab exists (step S1102). In the case where the blank tab exists, it instructs the window execution processes 908 to 911 corresponding to the blank tab to display the information opened by the script in the window corresponding to the blank tab. Thus, there is no longer an unnecessary window opened on the screen so that the user will not be bothered. In the case where the user wants to view the contents of the document opened by the script, the contents are viewable at any time by pushing the hardware button corresponding to the blank tab so as not tomiss the information.

In the case where no blank tab exists, various techniques are conceivable as to how to handle the information opened by the script. By way of example, the following methods are thinkable. (1) To open the information opened by the script in the window other than the window of the highest-level layer; or (2) to display a dialog for prompting the user to select the window for opening the information opened by the script.

### [When the user requests the opening of a new markup language document]

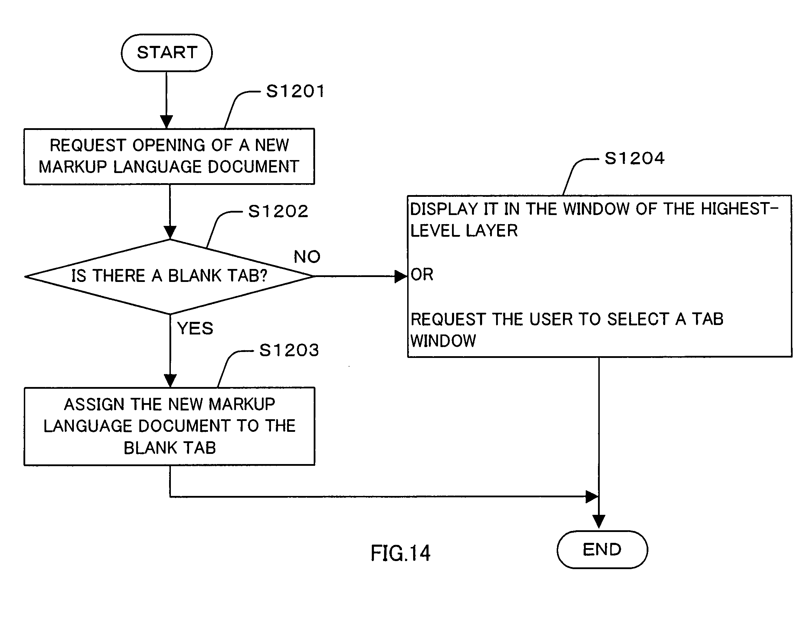

Next, a description will be given by referring to FIG. 14 as to an operation example of the browser in the case where the user requests the opening of a newmarkup language document. FIG. 14 is a flowchart showing the operation example of the browser in the case where the user requests the opening of a new markup language document

First, the user requests the browser to open a new markup language document. This request is performed, as with the predetermined process in the step S1004 of FIG. 12 for instance, by having the URL input dialog displayed in the case where the hardware button corresponding to the tab of the window currently in the highest-level layer is pushed. The user interface control process 902 detects this request (step S1201), and determines whether or not the blank tab exists (step S1202). In the case where the blank tab exists, it instructs the window execution processes 908 to 911 corresponding to the blank tab to display the information opened according to the request of the user in the window corresponding to the blank tab (step S1203). Thus, there is no longer an unnecessary window opened on the screen so that the user will not be bothered.

In the case where no blank tab exists, various techniques are conceivable as to how to handle the information opened according to the request of the user. By way of example, the following methods are thinkable. (1) To open the information requested by the user in the window other than the window of the highest-level layer; or (2) to display a dialog for prompting the user to select the window for opening the requested information. It is possible, by performing such a process, to prevent the displayed information in the window from being hidden by a new window and the information viewing of the user from being interfered.

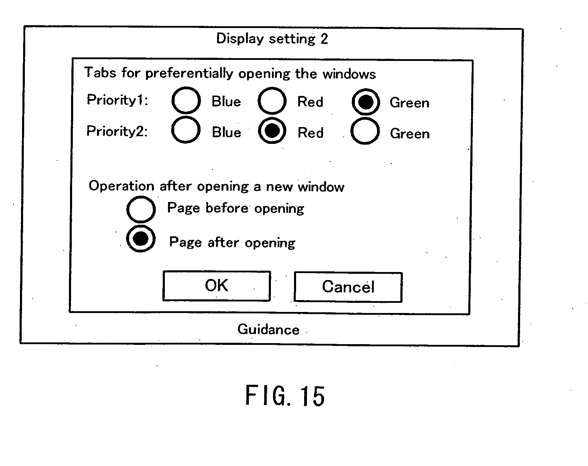

It is also possible, as an applicable method, for the user to preset the process as to the case where no blank tab exists. FIG. 15 shows an example of a dialog box for the user to preset the operation in the case of no blank tab. The user can preset how the browser should operate in the case where no blank tab exists according to such a screen so as to allow the browser operation to be controlled according to needs and preference of the user.

The embodiment exemplifies the TV set as a concrete example of the browser apparatus of the present invention. However, the present invention includes the content display apparatuses for displaying the information on a display, such as a game console, a car navigation system, a video apparatus and a DVD player for instance.

### [Display of focus display information]

As for the browser according to this embodiment, in the case where the window 401 is switched, the tabs 402a to 402d corresponding to the window 401 currently in the highest-level layer and being active are brightened so as to let the user know which window 401 is currently in the highest-level layer and being active. However, the user's line of sight is generally directed toward the contents displayed in the window 401. Therefore, it may be difficult, with only the display of the tabs 402a to 402d displayed outside the window, to see which window 401 is currently in the highest-level layer and being active.

Thus, in the case where an anchor (link) in the window 401 is focused (selected), the focus display information which is the information for visually informing the user that the anchor is focused is displayed in a window-corresponding color which is the color corresponding to the window 401. The focus display information moves to the newly focused anchor according to the switch of the focused anchor. The switch of the focused anchor is performed by operating a four-way key (not shown) provided to the remote controller 611 for instance.

The "focus display information" is the information capable of indicating to the user that the anchor is selected, such as an underline attached to the anchor, a highlight (reversing display) or a frame enclosing the anchor for instance. This embodiment will be described on condition that the frame enclosing the anchor is displayed as the focus display information.

The "window-corresponding color" is one color determined for each window, and the window-corresponding color of one window 401 is determined to be different from the window-corresponding colors of other windows 401. For instance, in the case where the browser program displays four windows 401 of the first to fourth, the window-corresponding colors of the first to fourth windows 401 are determined as "red, " "blue, " "green" and "yellow." Therefore, if the window currently displayed in the highest-level layer is switched from the first window 401 to the second window 401, the color of the frame enclosing the selected anchor in the window 401 changes from "red" to "blue."

The window-corresponding color may be determined to be the color matching with or similar to the display color of the tab given to each window, or may be determined to be the color matching with or similar to the color given to the hardware button corresponding to each window.

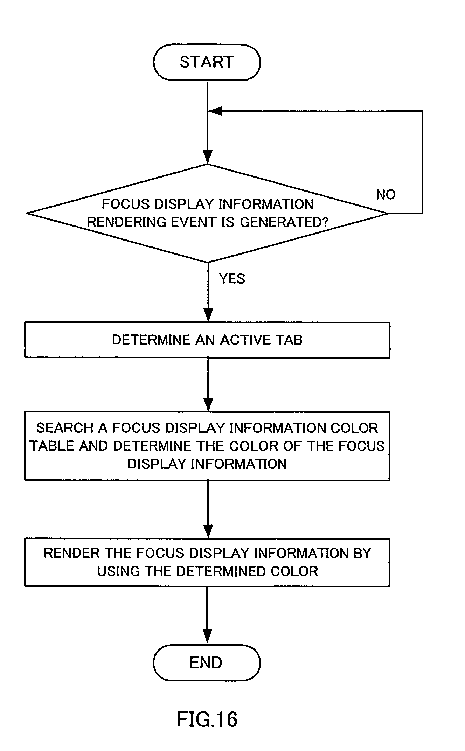

FIG. 16 is a flowchart showing an example of a display process in which the browser program according to this embodiment displays the frame enclosing the anchor as the focus display information in the window-corresponding color of the window currently displayed in the highest-level layer. Hereunder, a description will be given by referring to FIG. 16 as to the process of displaying the frame enclosing the anchor as the focus display information in the window-corresponding color of the window currently displayed in the highest-level layer.

First, the browser program determines whether or not a focus display information rendering event is generated (step S1301). This determination is made by the window display process 912. The following are thinkable as the focus display information rendering events.
(1) When an active tab is changed
(2) When the user moves the focus
(3) When new contents are displayed in the window
(4) When a displayed menu and so on are erased and a hidden browser screen (all or a part) is displayed

The focus display information rendering events are not limited to the above (1) to (4), but generation of the focus display information rendering event may also be regarded as timing suited to displaying the frame enclosing the anchor as the focus display information in the window-corresponding color of the window currently displayed in the highest-level layer.

In the case where the window display process 912 determines that no focus display information rendering event is generated, the browser program repeats the step S1301.

In the case where the windowdisplayprocess 912 determines that the focus display information rendering event is generated, the browser program determines which tab among the tabs 402a to 402d is the active tab of the window 401 currently displayed in the highest-level layer (step S1302). This determination is made by making an inquiry from the window display process 912 to a UI control process 902 which then notifies the window display process 912 of the tab currently active.

Following the determination in the step S1302, the browser program refers to a focus frame color table and determines a frame color of the frame which is the focus display information (step S1303). The browser program has the focus frame color table prepared in advance, which correspondingly stores the information for specifying the tabs and the information for specifying the frame color. The information for specifying the tabs is tab numbers "1," "2" "3" and "4" for instance. The information for specifying the frame colormaybe described as an RGB value or a color number indicated in a separately stored color table. The focus frame color table may be in any data format if capable of correspondingly storing the information for specifying the tabs and the information for specifying the frame color, and is implemented by an array type variable for instance. The window display process 912 receives the tab number of the currently active tab from the UI control process 902, and refers to the array type variable as the focus frame color table by using the tab number as a suffix so as to determine the information for specifying the frame color corresponding to the suffix as the frame color.

Following the determination of the frame color in the step S1303, the browser program renders the frame enclosing the focused anchor by using the determined frame color (step S1304). A rendering process of this frame is performed by the window display process 912, and it is passed to the display driver 604 as the image data in a bitmap format together with the contents in the active window 401 so as to be displayed. It is decided in advance by the process of the HTML parser S802 as to which anchor is focused.

It is desirable that the frame colors as the focus display information correspond to the tabs 402a to 402d one-on-one. It is thereby possible for the user to instinctively grasp that the tabs 402a to 402d are switched and which window 401 is currently displayed in the highest-level layer. It is desirable that the relation between the color of the color buttons provided to the remote controller 611 for selecting the tab 401 and the frame color be the same or similar color so that the user can instinctively grasp it.

### [Display example of the focus display information]

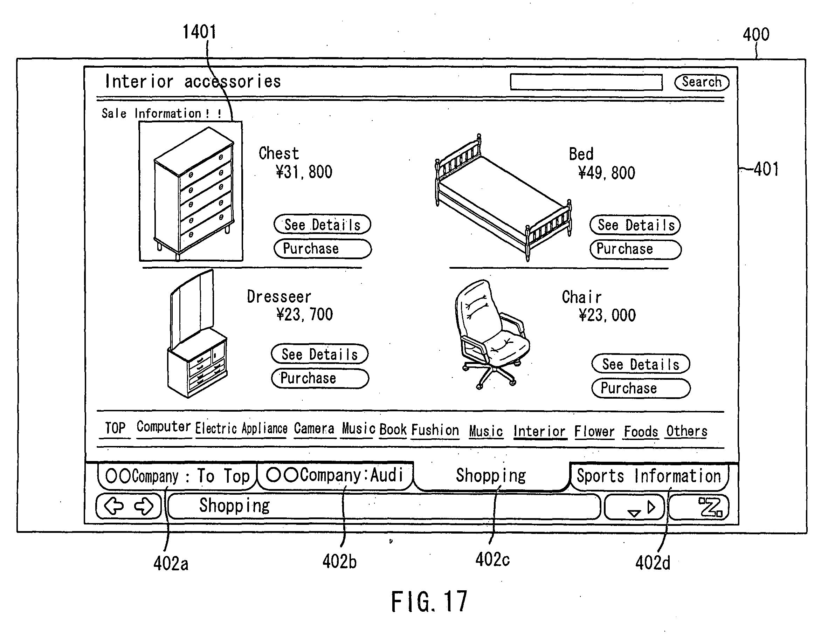

Next, a description will be given by referring to Figs. 17 to 20 as to a display example of the frame as the focus display information. Figs. 17 to 20 are diagrams showing examples of the display screen including the frame as the focus display information, which is the display screen of the browser.

FIG. 17 is a diagram showing an example of the screen in a state in which a tab 402c is active. In this example, the contents relating to interior accessories are displayed in the window 401 while an image of a chest in the upper left portion of the window 401 is a focused anchor, where a frame 1401 is shown with the image of a chest. In this example, the color of both the tab 402c and frame 1401 is "yellow" so that the user can instinctively grasp the relation between the frame and the tab.

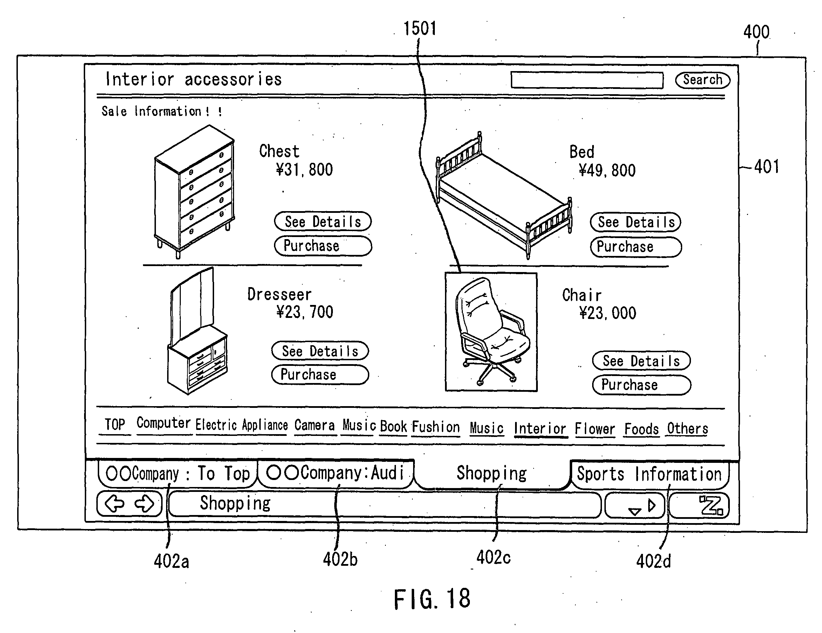

FIG. 18 shows the state in which the user manipulated the four-way key of the remote controller 611 from the state shown in Fig. 17 so that the focus has moved to a new anchor. In this example, the focus has moved from the image of the chest in the upper left portion of the window 401 to an image of a chair displayed in the lower right portion, and so the frame 1401 is not displayed and a frame 1402 enclosing the image of the chair is displayed. A frame 1501 is displayed in "yellow" as with the tab 402c and frame 1401. Because of the frame 1501, the user can instinctively grasp that the focus has moved although the tab 402c has not been switched.

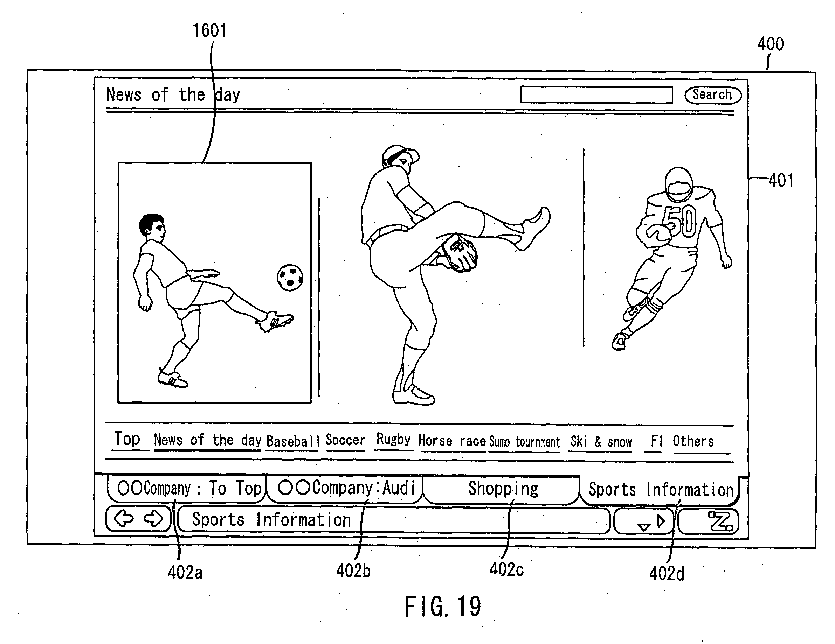

Next, FIG. 19 shows the state in which the user manipulated the color buttons of the remote controller 611 from the state of Fig. 18 so that another tab 402d is put in the active state. There are the contents relating to sports displayed in the window 401, and the image of a soccer player in the left part of the window 401 is a focused anchor, where a frame 1601 is displayed for the image of the soccer player. In this example, the color of both the tab 402d and frame 1601 is "green" so that the user can instinctively grasp the relation between the frame and the tab. Consequently, the user perceives that the color of the frame 1601 displayed in the window has changed from previous "yellow" to "green" so as to instinctively recognize that the active tab has changed to the tab 402d displayed in "green."

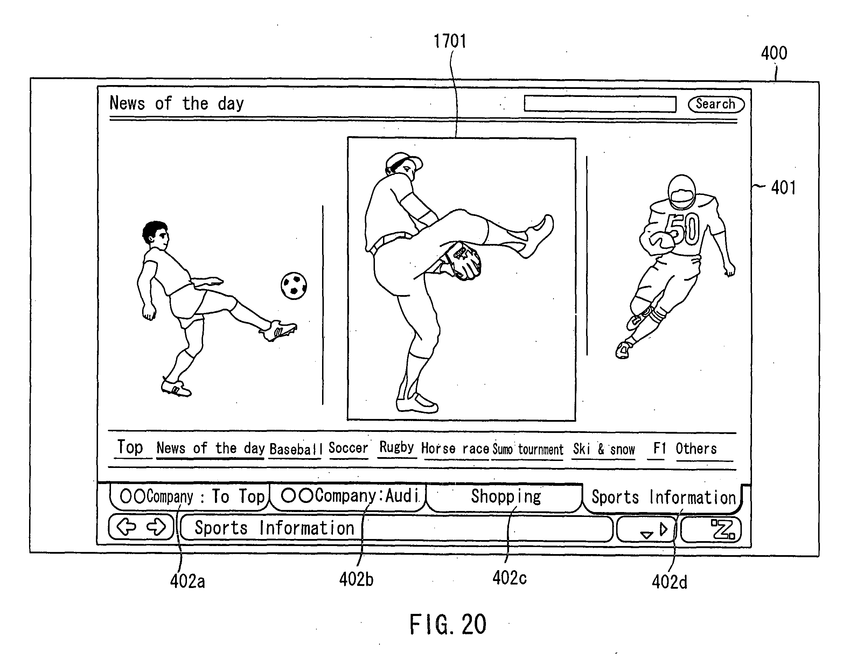

FIG. 20 shows the state in which the user manipulated the four-way key of the remote controller 611 from the state shown in Figs. 19 so that the focus has moved to a new anchor. In this example, the focus has moved from the image of the soccer player in the left part of the window 401 to the image of a baseball player displayed in the center, and the frame 1601 is not displayed while a frame 1701 enclosing the baseball player is displayed. The frame 1701 is displayed in "green" as with the tab 402c and frame 1601. Because of the frame 1701, the user can instinctively grasp that the focus has moved to another anchor although the tab 402d has not been switched.

In general, there are many cases where the user always sees the screen, and in particular, the focused anchor. However, it is possible, when the tab is switched, to change the color of the focus display information to the color corresponding to the tab so as to make it instinctively understandable that the tab is switched.

## Claims

1. A browser program **characterized by**:
displaying windows corresponding to at least a part of multiple buttons, the windows being the same number as at least a part of multiple buttons provided to operating means of a content display apparatus for displaying contents on a display by superimposing them on a display area of the display;
being able to display at least a part of results of interpreting a markup language document in each window; and
if one of the buttons other than the button corresponding to the window currently displayed in the highest-level layer is activated, displaying the window corresponding to this button in the highest-level layer.

2. The browser program according to claim 1, **characterized in that** if the button corresponding to the window currently displayed in the highest-level layer is activated, it conducts an operation other than displaying a predetermined window in the highest-level layer.

3. The browser program according to claim 2 **characterized in that**, if the window currently displayed in the highest-level layer has a frame structure, the operation other than displaying a predetermined window in the highest-level layer is to switch between frames.

4. The browser program according to any one of claims 1 to 3 **characterized in that** the operating means is a remote controller separate and independent from a main unit of the content display apparatus.

5. The browser program according to any one of claims 1 to 4 **characterized in that**, if at least apart of the markup language document displayed as the results of interpretation in the window currently displayed in the highest-level layer includes one or multiple focus elements, it displays focus display information, when one of the focus elements is selected, indicating a selected focus element in a window-corresponding color which is a color associated with the window currently displayed in the highest-level layer and determined to be different for each window.

6. A content display apparatus **characterized by**:
displaying windows corresponding to as at least a part of multiple buttons, the windows being the same number as at least a part of multiple buttons provided to operating means by superimposing them on a display area of the display;
being able to display at least a part of results of interpreting a markup language document in each window; and
if one of the buttons other than the button corresponding to the window currently displayed in the highest-level layer is activated, displaying the window corresponding to this button in the highest-level layer.

7. A content display apparatus according to claim 6, **characterized in that**, if the button corresponding to the window currently displayed in the highest-level layer is activated, it conducts an operation other than displaying a predetermined window in the highest-level layer.

8. The content display apparatus according to claim 6 **characterized in that** if the window currently displayed in the highest-level layer has a frame structure, the operation other than displaying a predetermined window in the highest-level layer is to switch between frames.

9. The content display apparatus according to any one of claims 6 to 8 **characterized in that** the operating means is a remote controller separate and independent from a main unit of the content display apparatus.

10. The content display apparatus according to any one of claims 6 to 9 **characterized in that**, if at least a part of the markup language document displayed as the results of interpretation in the window currently displayed in the highest-level layer includes one or multiple focus elements, it displays focus display information, when one of the focus elements is selected, indicating a selected focus element in a window-corresponding color which is a color associated with the window currently displayed in the highest-level layer and determined to be different for each window.

11. The content display apparatus according to any one of claims 6 to 10 **characterized by** incorporating a display.

12. The content display apparatus according to any one of claims 6 to 10 **characterized by** having the display externally connected.
